# EUROPEAN PATENT SPECIFICATION

(11) **EP 3 391 754 B1**
(45) Date of publication and mention of the grant of the patent: **18.12.2019**
(21) Application number: 17382214.9
(22) Date of filing: 21.04.2017
(51) Int. Cl.: A23K 10/00

(54) **FOOD ADDITIVE FOR ANIMALS, METHOD OF PREPARATION AND USE AS A PROPHYLACTIC AGAINST RUMINAL ACIDOSIS**
FUTTERZUSATZ FÜR TIERE, VERFAHREN ZUR HERSTELLUNG UND VERWENDUNG ALS PROPHYLAKTIKUM GEGEN PANSENAZIDOSE
ADDITIF ALIMENTAIRE POUR ANIMAUX, PROCÉDÉ DE PRÉPARATION ET UTILISATION EN TANT QU'AGENT PROPHYLACTIQUE CONTRE L'ACIDOSE DU RUMEN

(43) Date of publication of application: 24.10.2018
(73) Proprietor: Tolsa, S.A., 28031 Madrid (ES)
(72) Inventor: MARTIN RODADO, Sara, 28031 MADRID (ES); DE JUAN GARCIA, Francisco, 28031 MADRID (ES); MARTINEZ DEL OLMO, Diego, 28031 MADRID (ES)
(74) Representative: Ungria López, Javier

(56) References cited:
- WO-A1-88/04930
- WO-A2-2008/147807
- US-A- 5 264 227
- US-A1- 2014 186 472
- DATABASE WPI Week 201023 Thomson Scientific, London, GB; AN 2010-D19581 XP002771187, & CN 101 664 120 A (ZUNYI JINDING AGRIC TECHNOLOGY CO LTD) 10 March 2010 (2010-03-10)

## Description

### Object and application field of the invention

This invention falls within the sector for the manufacturing of animal feed and additives, specifically the manufacture and development of ingredients for the formulation of additive compositions in animal feed, for use directly on the animal or incorporated into an advanced formulation (pre-mixtures of additives or ingredients). Although the essential invention is specifically designed for ruminant feed, it is possible to use some preferred formulations in other types of non-ruminant animals with beneficial dietary effects.

### Background of the invention

Ruminal acidosis, commonly known as subacute or subclinical ruminal acidosis (SARA), is one of the most frequently detected problems in intensive ruminant exploitation and that causes the greatest economic repercussions, due to the health problems deriving from it as well as the decreased excretion of solids in milk (in the case of dairy farms) and lower average daily gain (in the case of production holdings). SARA is caused when ruminal pH drops below a value of 5.5 for prolonged periods of time. Ruminal pH is a measurement of the acidity or alkalinity of the contents present in rumen. For greater digestive optimization and improved health, ruminal pH should remain above 5.8 for the largest amount of time possible.

On diary farms, this problem is caused by the excessive energy intake, mainly in the form of non-fibrous carbohydrates, in order to satisfy the high uncovered energy demand, especially at the beginning of lactation due to the ingestion of limited dry material during this period, which causes an imbalance in the ruminal flora because the amount of fiber ingested is insufficient to counteract the overproduction of volatile fatty acids and lactic acid. On the other hand, animals suitable for meat production and specifically fattened in intensive production facilities, where the feeding system is ad libitum, SARA is caused by the deficit in the consumption of fiber in relation to the consumption of concentrates, which are foods rich in energy, especially non-fibrous carbohydrates, as is the case of dairy farms.

This overproduction of volatile fatty acids and lactic acid makes it impossible for the ruminal papillae to absorb them, causing them to accumulate in the rumen, which in turn causes the pH of the rumen to drop, resulting in the appearance of the problem.

In the case of milk ruminants, the symptoms are decreased production, in the form of lower milk production and production of raw fat and raw protein in the milk, and in the most extreme cases, the appearance of "low milk fat syndrome", in which the ratios of raw fat/protein are often reversed. In the case of meat ruminants, the symptoms are lower average daily gain, metabolic problems such as lameness, causing the removal of the animals from production or even death and loss at the slaughterhouse, due not only to the lower make-up of meat but also due to the seizure by the industry of parts such as livers and other internal organs affected by the parakeratosis caused, which decreases the economic value of the carcass.

The appearance of ruminal acidosis under current production conditions is inevitable, and what can be done is to control and reduce the time over the course of the day that the pH is below the limit of 5.8 using handling measures, rationing of the fodder used, the formulation of designed supplementary feed, and the use of food additives that minimize the appearance of SARA.

For this reason, there are different compositions on the market with antacid properties that are incorporated into ruminant feed due to their buffering effect. It is therefore known that buffer products for ruminant feed improve ruminal activity, particularly in animals that are fed highly concentrated grain rations that could suffer subclinical ruminal acidosis. In practice, including acid-neutral salts in ruminant feed is usually carried out to neutralize the acid produced at rumen level and reduce acidosis (International Patent application WO 88/04930). There are many different types of acid-neutral salts, such as bicarbonate, sodium carbonate, magnesium carbonate, potassium bicarbonate, potassium chloride, potassium hydroxide, potassium phosphate, sodium chloride, and mixtures thereof (Emery, R. S, and Brown, L. D. (1961). Effect of feeding sodium and potassium bicarbonate on milk fat, rumen pH and volatile fatty acid production. J. Dairy Sci., 44:1899; Lassiter, J. W. et al. (1963). Effect of sodium bicarbonate on microbial activity in the rumen. J. Animal Sci., 22:335*;* Emery R.S., et al. (1964). Effect of sodium and calcium carbonates on milk production and composition of milk, blood, and rumen contents of cows fed grain ad libitum with restricted roughage. J. Dairy Sci.*).*

The most common additives for the prevention of subclinical ruminal acidosis are sodium bicarbonate and magnesium oxide. Sodium bicarbonate controls the acidification, but it has the drawback that it dissociates at acidic pH values and its pH regulation effect decreases over time, as it does not have the capacity to alkalize, since it does not produce a prolonged buffering effect, reducing its reaction time. This means that it does not cause pH increases above a certain value, and although it does have a large capacity to absorb acid, due to its high solubility in water (a medium that is present to a large extent in the animal's rumen), it remains intact for a short time in conditions that simulate the continuous addition of acid; however, a buffer must achieve an effect that is as prolonged as possible over time after each ingestion of food (as close as possible to 8 hours), which is when the ruminal pH rises again in physiological conditions. Also, bicarbonate lacks an alkalizing effect, so simultaneous use with agents that have that property, such as magnesium oxide, is absolutely necessary, requiring the use of a high proportion of additive, which generates, on one hand, an issue of price in the manufacture of feed for ruminants, and on the other, once a certain amount of additive is reached, it generates intake rejection by the animal, which would aggravate the problem of SARA.

On the other hand, magnesium oxide has a dual use in animal diets: as an alkalizing regulator of ruminal pH, which increases said pH, and as a contribution of available magnesium, making it a potentially important source of this nutrient (Tas, B.M. (2012). Apparent Magnesium Absorption and Excretion of six Mg sources in lactating dairy cows. Schothorst Feed Research*).* However, when used as an alkalizing agent, magnesium oxide does not have the capacity to maintain the pH at a particular value, which makes it essential to use it in combination with sodium bicarbonate under practical conditions of rationing, the opposite of what happens in the case of sodium bicarbonate.

Another drawback is the negative effect on ingestion and on the palatability of the traditional additives used in ruminant formulations, sodium bicarbonate and magnesium oxide (cited in the FEDNA conference, Trastornos ruminales en el vacuno lechero: un enfoque práctico (Rumen disorders in dairy cattle: a practical approach). Alex Bach, 2002), and they make fighting acidosis a challenge that is difficult to solve with the use of these additives at high incorporation doses.

Attempts to use other additives in ruminant feed in order to improve its properties have been reported in the literature. Thus, there is a prior patent for a simple mixture of zeolite and dolomite, mainly for ruminal use, but with no significant effect in comparison with bicarbonate (United States patent application US 2014/0134308 A1).

Also, buffering compositions are occasionally presented in the form of solutions formed by the mixture of the aforementioned alkalizing salts. For instance. WO 88/04930 A1 discloses a buffer composition mainly containing a source of alkalinity, such as sodium carbonate, for being administered in non-human mammals in order to neutralize excess acid production. In these cases, the smectite-type phyllosilicates have been used as suspending agents of said suspensions (US patent 4,888,185). These smectite-type phyllosilicates are not only used in ruminant feed for this purpose, but they are also used as binders in a 5% dose of a pellet with buffer functions (US patent 4,976,963), but not because of their properties to regulate the ruminal medium and contribution of magnesium. Also, phyllosilicates have generally been used as moisture absorbents, along with different raw materials used in the final feed (US patent 5,908,634) and as a filler material, without described nutritional effect, of buffering products whose principal base are yeasts to regulate ruminal pH (International Patent application WO 2007/038320 A1). In all cases, the use of phyllosilicates as active ingredients in food additives whose function is to regulate, modify ruminal pH, and contribute magnesium has not been described to date.

It is also known that the incorporation of smectite-type phyllosilicates into feed for animals for slaughter has many advantages, because they increase salivation, achieve greater weight gain of fattening animals, and increased moisture absorption, improve the digestibility of the fiber, and improve growth and productive output of animals. In this sense. CN 101664120 A discloses a concentrated feed for nursing sow containing a low amount of smectite and of sodium bicarbonate for reducing the weight loss and increasing the production of milk. They also produce more gradual changes in the rumen pH than the customary buffers, but do not mitigate the problem of subclinical ruminal acidosis, so they cannot be used for this purpose, with the aforementioned additives, sodium bicarbonate and magnesium oxide, being used to date (Horn G.W., et al. (1979). Dietary buffers and ruminal and blood parameters of subclinical lactic acidosis in steers. Am. Soc. of Ani. Sci.).

Indeed, while bicarbonate is a pH regulator and has an instantaneous reaction, certain smectites have a certain improved effect in ruminant diets (Colling D. P. et al., Nielsen (1979). Effects of Adding Sodium Bentonite to High Grain Diets for Ruminants. An. Soc. of An. Sci.*).* Phyllosilicates have a more prolonged action, releasing the magnesium cations slowly, neutralizing the acid that is generated in the rumen and increasing its pH (Aitchison E.M. et al (1986). Effect of bentonite clays on rumen fermentation and diet digestibility, Proc. Nutr. Soc. Aust, Huntington; G. B. et al. (1979). Sodium Bentonite or Sodium Bicarbonate as Aids in Feeding High-Concentrate Diets to Lambs. Am. Soc. of An. Sci.*).* The effect of the bicarbonate acts by quickly buffering the ruminal pH, while it appears that the effect of the clay maintains it and extends it over time, but not sufficiently enough to satisfy current meat and dairy cattle breeding conditions, because it does not neutralize a sufficient amount of the acid generated in ruminal conditions (Horn G.W. et al. (1976). Effect of dietary buffers on ruminal and systemic acidosis of steers. An. Sci.). Research*).* Sodium smectites also provide an electrolytic balance of the essential elements potassium, magnesium, chlorine, and sodium. However, none of the prior documents mentions the effect of the magnesium phyllosilicates or their activations and combinations on ruminal pH and their simultaneous use to contribute magnesium.

Therefore, optimum pH is not achieved using only phyllosilicates, and more specifically, smectite-type phyllosilicates, and it poses a problem when used as a therapeutic treatment after the problem of acidosis has already been triggered (Forster, D. et al. (1990). Use of bentonite as an ion exchanger in acute ruminal acidosis of sheep. Monatshefte fur Veterinarmedizin. Vol.45 No.7: pp.247-249 ref.10). The present invention aims to mitigate this problem.

The incorporation of phyllosilicates and sodium bicarbonate separately as ingredients in the final formulation of feed (a dose of 2% of each ingredient, 4% in total) has been shown to increase consumption and growth of animals, due to an additive effect of both ingredients separately, rather than to a synergetic effect (Dunn B.H. et al. (1979). Embry Sodium Bentonite and Sodium Bicarbonate in High-Concentrate Diets for Lambs and Steers J. An. Sci.*).* WO 2008/147807 A2 discloses a layered phyllosilicates that, alone or mixed with other cholesterol reducing agents, such as sodium-carbonate, is directed to reduce the hypercholesteremia in mammals.

The present invention is intended to provide new solutions to the problems detected in the field of feed and additives for animals and the problem of subclinical ruminal acidosis. To date, there are no articles in the literature that describe the use of activated phyllosilicates in pre-mixture food additives, or the combination of these phyllosilicates with magnesium oxide or with sodium carbonate, intended for incorporation into a feed or final diet that manages to mitigate the effect of acidosis at a low incorporation dose and that competes with the use of the additives traditionally used for this purpose. The object of this invention falls within additives that minimize the risk of the appearance of the problem of ruminal acidosis or that reduce the symptoms of the disease, combining the buffering effects of the acids generated during the digestive process with the alkalizing effects in the rumen of the animal, and in addition, to improve its advantages by providing a high content of available magnesium for the animal, which is normally included through more dietary additives.

### General description of the invention

The present invention relates to a food additive for animals comprising:
- a magnesium phyllosilicate having a specific surface area of between 50 and 160 m2/g, a cation exchange capacity of between 30 and 170 meq/100 grams, and an intrinsic pH of between 6.5 and 11 in an amount ranging from 31.2% to 98.2% by weight with respect to the total weight of the additive; activated with
- at least one sodium-containing buffering agent, in a proportion of between 1.8% and 68.8% by weight relative to the total weight of the additive.

The fact that the phyllosilicate is activated must be understood herein as the state in which the phyllosilicate is present when mixed with the sodium-containing buffering agent, the activation consisting specifically in increasing the interlaminar space and facilitating cation exchange. To promote activation, the phyllosilicate is mixed with a suspension of the sodium-containing buffering agent, normally in drinking water.

The specific surface area of the magnesium phyllosilicate was measured by degassing the clay with a flow of nitrogen for 18 h at 125°C and measuring with a Micromeritics, Gemini V surface analyzer. On the other hand, the cation exchange capacity was analyzed by adding ammonium acetate, such that after several hours of digestion, ammonium chloride and propanol were added until it disappeared, precipitated in the sample, measuring by means of an ammonium selective electrode. For the pH, a solution was prepared and stabilized for 24h, and then measured with a pH-meter.

Thus, the present invention thus manages to combine the buffering effects of the additives in ruminal conditions, such as sodium bicarbonate, with the nutraceutical effects associated with aluminosilicates in animal feed due to their high specific surface area, high water-absorption capacity, high oil-absorption capacity, and in this specific combination of the invention, also providing a level of magnesium available for the animal. This is combined with the fact that the described additive composition presents a lower level of heavy metals than the additives that are commonly used, including magnesium oxide and sodium bicarbonate as separate additives, and without the negative effects on palatability that have been demonstrated in the case of the rest of the additives used for this purpose.

The resistance to the decrease in pH by 1 point remains longer than in the sodium bicarbonate and at the same time, the invention shows an alkalizing capacity to increase the pH similar to that of magnesium oxide when it is incorporated into the diet as an additive. The result of all of this is that the described food additive can be used in lower doses and with better results in the formulation of diets for ruminants than the components used separately, at a lower cost of inclusion and without detriment to the health of the animals, due to its high buffering power, high alkalizing power, and high contribution of available magnesium.

Indeed, one of the main advantages of the food additive is that because of its buffering composition (due to the effect of the sodium-containing compound) and alkalizing agent (conferred by the activated phyllosilicate itself containing magnesium), it is possible to replace all or part of the additives traditionally used hitherto for this purpose with said additive, by achieving a longer period of activity in the rumen of the animal, and simultaneously providing magnesium in a more economical and safe manner than traditional sources (magnesium oxide), also using a significantly smaller amount of additive, resolving the economic problem in the feed formulations for animals, especially ruminants, due to the buffering effect. This combined synergetic effect of the buffering action and the alkalizing action at lower quantities of the compounds involved represents a significant advantage over other additives known in the field of animal feeding.

In short, the described additive composition offers multiple benefits in comparison with other feed compounds for animals used as buffering agents, because in addition to being a buffering compound in ruminant diets, it is also an alkalizing compound as well as a source of magnesium, not only in formulations for ruminants in general (steer, sheep, and goats) for milk as well as meat production, but also for the rest of the animals, where it may be used as an additional source of magnesium.

Another object of the invention is a process for preparing the additive composition described herein, comprising:
- activating a magnesium phyllosilicate, having a specific surface area of between 50 and 160 m2/g, a cation exchange capacity of between 30 and 170 meq/100 grams, and an intrinsic pH of between 6.5 and 11 and a particle size equal to or less than 25 mm. with a sodium-containing buffering agent in the presence of water, the amount of phyllosilicate being between 31.2% and 98.2% and the amount of buffering agent being between 1.8% and 68.8%, by weight relative to the total weight of the composition; and
- grinding the activated magnesium phyllosilicate to a particle size of equal to or less than 0.15 mm.

Activation of the magnesium phyllosilicate to the indicated sizes is intended to cause a high separation of individual particles, thereby increasing the specific surface area accessible to the exchange of hydroxyls and protons which are responsible for the pH control processes. The result of this process is an additive composition consisting of a magnesium phyllosilicate activated with a sodium-containing buffering agent, such as sodium carbonate, in order to achieve a combined buffering and alkalizing nutritional effect. The amount of water, usually drinking water for reasons of convenience and cost, is not relevant for the composition, because it simply facilitates mixing by preparing a suspension of the buffering agent to incorporate it into the phyllosilicate.

A third object of the invention is the use of the described food additive for animals, especially ruminants, as a ruminal pH regulator. It can also serve as a source of magnesium in any animal, both ruminants and non-ruminants, so it can be used as a magnesium food supplement for animals. Because of the additive's properties, it can be used for the prevention and/or treatment of subacute or subclinical ruminal acidosis, which, as mentioned above, is one of the most frequently detected problems affecting ruminant production, for both meat and dairy cattle breeding, and that causes most problems of inefficiency on livestock holdings. Thus, the invention also relates to a food additive for use in medicine, and specifically in the prevention and/or treatment of said disease in animals.

It should be noted that during the development of the present invention, not only the food additive described above was found to have beneficial effects as a buffering agent and ruminal pH regulator, but also any additive composition simply comprising a natural magnesium phyllosilicate as defined, without activation, as demonstrated in the examples, without the need for additional buffering or alkalizing agents. For this reason, the present invention also relates to the use of a food additive comprising a magnesium phyllosilicate, in its natural state, in an amount ranging from 31.2% to 98.2%, and having a specific surface area of between 50 and 160 m2/g, a cation exchange capacity of between 30 and 170 meq/100 grams, and an intrinsic pH of between 6.5 and 11, as the ruminal pH regulator. As will be seen below, preferably, this phyllosilicate is a smectite-type phyllosilicate, and even more preferably, it is a saponite.

A fourth object of the present invention is a feed for animals comprising the described food additive in its formulation. In addition, the invention relates to a pre-mixture of food additives for animal feed, both ruminants and non-ruminants, comprising the described food additive.

### Detailed description of the invention

It is preferable that the magnesium phyllosilicate included in the additive composition be a magnesium smectite-type phyllosilicate, due to its high magnesium content (>10%) and the buffering power linked to this type of phyllosilicate (magnesium). Even more preferably, the use of a trioctahedral smectite is recommended, the most preferred of these being saponite, due to its high specific surface area (150-160 m2/g), its moderate cation exchange capacity (between 60 and 80 meq./100g) and its high intrinsic pH (between 8 and 10), which promote the buffering results.

Clay minerals, including sepiolite and smectites (also known in the industry as bentonites), derive most of their properties from the development of a high specific surface area capable of interacting with surrounding water molecules, as well as the organic and ion species present in solution. Specifically, smectites form a family of minerals that includes montmorillonites, beidelites, saponites, and stevensites, characterized in that they undergo strong hydration in the presence of water, which allows the exchange of protons and/or ion species. These give its microenvironment an alkaline pH and a capacity to buffer the medium through the effect of the high density of active centers. In addition, smectites such as saponites can combine this buffering nature with especially small particles, which multiplies their level of interaction with the medium.

Smectites are formed by the stacking of sheets of aluminum and magnesium silicates, bound to each other by cations, responsible for hydration in the presence of water. The maximum surface area of the particles is achieved after the maximum separation of the individual silicate sheets. This sheet dispersion process mainly involves the presence of sodium ions between sheets, generated, in the case of the present invention, through the incorporation (activation) of the described buffering agent (which has been referred to as activation). The large hydration capacity of the Na⁽⁺⁾ cation allows the separation of sheets through the accumulation of hydration water molecules around the ions. Thus, the activation process with the sodium-containing buffering agent to which the phyllosilicate is subjected significantly increases the proportion of sodium ions between the sheets, compared to other less hydratable cations such as calcium or magnesium, with very advantageous effects.

Preferably, the sodium-containing buffering agent and activates the phyllosilicate is selected from the group consisting of: sodium carbonate, sodium bicarbonate, and any of their combinations. In the most preferred case of all, the buffering agent is sodium carbonate.

It is advisable that the ratio between the magnesium phyllosilicate and the activating buffering agent contained in the food additive be maintained, at best, between 96:4 and 98:2 on 100 parts by weight of the total of the two components, the first value being the phyllosilicate and the second value the buffering agent.

In a first particular embodiment of the invention, the food additive consists exclusively of the described magnesium phyllosilicate, in any of its variants, activated with the sodium-containing buffering agent. Thus, the additive consists of the phyllosilicate in an amount of between 96% and 98%, activated with the buffering agent in an amount ranging from 2% to 4% by weight relative to the total weight of the additive, including both limits.

In a second particular embodiment of the invention, the food additive comprises the magnesium phyllosilicate, having a specific surface area of between 50 and 160 m2/g, a cation exchange capacity of between 30 and 170 meq/100 grams, and an intrinsic pH of between 6.5 and 11 in an amount ranging from 31.2% to 89.8% by weight with respect to the total weight of the additive; activated with at least one sodium-containing buffering agent, in a proportion of between 1.8% and 5.2% by weight relative to the total weight of the additive

Preferably, the magnesium phyllosilicate (especially when it is saponite) is contained in the composition in an amount of at least 70% by weight of the total weight of the composition (and never more than 98.2%, as defined previously). Most preferably, the amount of magnesium phyllosilicate is between 65% and 80% by weight of the total weight of the additive.

In this second particular embodiment, the food additive may incorporate the buffering agent in an amount greater than that described for the activation (comprised between 1.8% and 5.2%), for example, in an additional amount comprised between 0.5% and 65% by weight of the total weight of the formulation of the additive (as stated, excluding the amount of the aforementioned buffering agent for the activation). More preferably, said additional amount of buffering agent is comprised between 0.5% and 15%, including both limits. The increase in the addition of the buffering agent to the additive has the advantage that an increased neutralization capacity was also confirmed as the amount of the buffering agent increases.

Also preferably, the food additive may contain an alkalizing agent in a proportion of between 0.5% and 65%, preferably between 10% and 15% by weight of the total weight of the additive formulation. Said alkalizing agent is, at best, magnesium oxide. The incorporation of the alkalizing agent aims to sharply increase the pH in the vicinity of the clay particles, which also promotes the dispersion of the clay by temporarily generating negative charges on the edges of the sheets, strengthening particle dispersion. The alkalizing agent significantly increases the alkalizing effects of the additive, further providing a level of available magnesium to the animal, which is much greater than the level that corresponds to the magnesium oxide incorporated on its own, achieving a much greater contribution of magnesium to the diet with a smaller amount of that component and of the additive in general.

In a particular and preferred case, the essential additive composition described above may comprise an additional amount of the buffering agent comprised between 0.5% and 65%, more preferably between 0.5% and 15%, combined with an amount of an alkalizing agent between 0.5% and 65% by weight of the total weight of the formulation of the additive.

Ultimately, the food additive, in all of its variants, comprises the magnesium phyllosilicate activated with the sodium-containing buffering agent in the specified amount, which is indispensable for activation, and in preferred cases in which it also incorporates other components, it may also contain: a) a greater amount of the buffering agent, even until it completes 100% of the formulation being, along with the phyllosilicate, the only component in the additive; b) an alkalizing agent, also until it completes 100% of the formulation, or c) a combination of both, buffering agent and alkalizing agent, until they complete 100% of the composition between the two, together with the activated phyllosilicate.

In the most preferred case of all, the food additive consists of 72% activated phyllosilicate and 28% buffering and alkalizing components (including 4% buffering agent for activation). Examples 1, 2, 4, 5, and 6 describe other preferred cases, which are those concerning the samples.

The food additive, in any of its variants, has a moisture content equal to or less than 14%.

As regards the process for obtaining the food additive, it may optionally comprise a step that consists of shredding the natural phyllosilicate prior to its activation, to the desired particle size, or in other words, equal to or less than 25 mm.

In a preferred embodiment of the invention, the process further comprises subjecting the activated phyllosilicate to a double extrusion process, as follows:
- subjecting the activated magnesium phyllosilicate to a first extrusion in the presence of water; and adding an amount of the sodium-containing buffering agent comprised between 1% and 2% by weight of the total weight of the additive;
- homogenizing the above mixture by means of a second extrusion with an amount of the buffering agent comprised between 1% and 2% by weight of the total weight of the additive in the presence of water; and
- subsequently adding an amount of the buffering agent comprised between 0.5% and 10% by weight of the total weight of the additive, prior to final grinding.

Thus, due to this preferred process, the previously described dispersion of sheets involves not only the presence of sodium ions between sheets, generated by the incorporation (activation) of the described buffering agent, but also, and beneficially, the pressure applied during the extrusion of the mineral. The use of a double extrusion generates two effects: the first is purely mechanical, generating pressure that favors the separation of the smectite agglomerates, and the second effect homogenizes and promotes the ion exchange between the calcium or magnesium ions naturally present in the smectites through the externally provided sodium cations.

In a more preferred embodiment, after the second extrusion, an amount of the sodium-containing buffering agent comprised between 0.5% and 10% by weight of the total weight of the additive is added. Also preferably, after the second extrusion, an alkalizing agent is added in an amount comprised between 0.5% and 20% by weight of the total weight of the additive; to ensure homogeneity and a closer bond between the three ingredients. In the most preferred case, both are added after the second extrusion. Preferably, prior to or after the final grinding of the already activated and double-extruded phyllosilicate, sodium carbonate is added in a dose of not less than 1% and not more than 10%, and also when an alkalizing agent is added, it is preferably added in a dose of not less than 1% and not more than 20% by weight of the total formulation of the additive formulation, both limits having been concluded.

It should be noted that in at least one buffering agent (and the alkalizing agent, when added) may be added to the activated and already double-extruded phyllosilicate prior to or after the final grinding stage, without altering the final result.

The purpose of this set of physical-chemical processes and operations is to cause a greater separation of individual particles, thus increasing the specific surface area accessible to the exchange of hydroxyls and protons, which are responsible for the pH control processes. The result of this process is an additive composition consisting of a double-extruded magnesium phyllosilicate incorporating a buffering agent, such as sodium carbonate, which may also have an alkalizing agent added, such as magnesium oxide, in order to achieve an optimal nutritional buffering and alkalizing effect.

The most preferred embodiment of the described procedure comprises:
- shredding the magnesium phyllosilicate to a particle size equal to or less than 25 mm;
- activating the shredded magnesium phyllosilicate with the sodium-containing buffering agent in the presence of water, in the proportions described above;
- subjecting the activated magnesium phyllosilicate to a first extrusion in the presence of water; and adding an amount of buffering agent comprised between 1% and 2% by weight of the total additive;
- homogenizing the above mixture by means of a second extrusion by adding an amount of the buffering agent comprised between 1% and 2% by weight of the total weight of the additive in the presence of water;
- adding an amount of the buffering agent comprised between 0.5% and 10% by weight of the total weight of the additive, and an amount of an alkalizing agent comprised between 0.5% and 20% by weight of the total weight of the additive, in order to ensure homogeneity and a stronger bond between the three ingredients; and
- grinding the final mixture to a particle size equal to or less than 0.15 mm.

Preferably, the shredding of the phyllosilicate is carried out in a shredder.

On the other hand, the activation of the phyllosilicate is performed in bulk after the addition of the buffering agent, so that the mineral is normally left to soak for 72 hours, according to known practices in the field.

Also preferably, the mixture of the activated phyllosilicate, the additional buffering agent, and optionally, the alkalizing agent prior to grinding is carried out in a mixer.

In a preferred case, the grinding is carried out in a mill.

As a result of the process described herein, the food additive obtained as a result of the process comprises:
- the magnesium phyllosilicate, having a specific surface area of between 50 and 160 m2/g, a cation exchange capacity of between 30 and 170 meq/100 grams, and an intrinsic pH of between 6.5 and 11 in an amount ranging from 31.2% to 98.2% by weight with respect to the total weight of the additive; activated with
- at least one sodium-containing buffering agent, in a proportion of between 1.8% and 68.8% by weight relative to the total weight of the additive.

In a preferred case, the food additive that can be obtained from the described process consists specifically of the phyllosilicate in an amount of between 96% and 98%, activated with the sodium carbonate in an amount of between 2% and 4% by weight, with respect to the total weight of the additive; in these cases, the method only includes the essential stages defined in the previous section.

In another preferred case, the food additive that can be obtained using the method consists of saponite in a concentration equal to or greater than 70% and not more than 89.8% by weight of the total weight of the formulation, activated with an amount of sodium carbonate comprised between 1.8-5.2% by weight with respect to the total weight, double-extruded with sodium carbonate in a concentration comprised between 1% and 2% by weight with respect to the total in each of the extrusions; with the later addition, prior to grinding, of sodium carbonate in a proportion greater than 1% and less than 10% and magnesium oxide in a concentration equal to or greater than 1% and less than 20%, including both limits.

In the most preferred case of all, the food additive that can be obtained using the method comprising a double extrusion prior to final grinding consists of 72% of magnesium phyllosilicate activated with 4% buffering agent (preferably sodium carbonate), and further comprising 2% of the same buffering agent in each of the two extrusions (4% additional buffering agent after two extrusions), plus an additional 5% of the buffering agent before grinding, with a 15% alkalizing agent, which is preferably magnesium oxide. In total, the food additive consists of 72% activated phyllosilicate and 28% buffering and alkalizing components. Examples 1, 2, 4, 5, and 6 describe other preferred cases, which are those relating to the samples.

The food additive obtained from the method has a moisture content equal to or less than 14%.

As can be seen from the previous section, the food additive may be incorporated as such into the animal's food or diet or may be incorporated into the feed. When the food additive forms part of a (complementary) feed for animals, both ruminants and non-ruminants, said feed preferably contains the additive in a proportion equal to or greater than 0.05% by weight of the total weight of the feed. In another alternative, the amount of food additive contained in the animal feed (for ruminants and non-ruminants) represents a proportion equal to or greater than 0.5% by weight of the total weight of the feed, and this range also represents the total amount of additive in the final diet, regardless of whether or not it is incorporated into the feed.

When the food additive forms part of a pre-mixture of food additives for animal feed, said pre-mixture preferably contains the additive in an amount equal to or greater than 1% by weight of the total weight of the formulation of the pre-mixture. In addition, the other ingredients of the pre-mixture may be additives commonly used in animal feeding, such as vitamins and minerals. This amount of food additive contained by the pre-mixture may represent the total of the final diet of the additive to be ingested.

The additive of the present invention is useful as a dietary supplement in animals of all types. Specifically, the use of the additive and of the pre-mixture or of the feed that contains it as a ruminal pH regulator, that is, in ruminants, is protected. However, it can also be used as a source of magnesium in any animal, ruminants and non-ruminants, especially when an alkalizing agent such as magnesium oxide is added to it. Thanks to the properties of the additive, it can be used for the prevention and/or treatment subacute or subclinical ruminal acidosis, which, as stated before, is one of the most frequently detected problems affecting ruminant production, for both meat and dairy cattle breeding, and that causes most problems of inefficiency in livestock holdings. Thus, the invention also relates to a food additive for use in the prevention and/or treatment of said disease in animals, especially in the most preferred case with a dose of 1 %-2% with respect to the total of the final diet to be ingested.

### Brief description of the figures

- Figure 1: Buffering effect of the food additive object of the present invention compared to two traditional buffering agents, sodium carbonate and sodium bicarbonate (time elapsed to obtain a pH lower than 5.5).
- Figure 2: Alkalizing effect of the food additive object of the present invention compared with magnesium oxide (maintaining a constant pH over time).
- Figure 3: Neutralizing effect of the food additive object of the present invention with the addition of sodium carbonate.
- Figure 4: Effect of the neutralizing capacity due to the activation of the food additive object of the present invention with sodium carbonate compared to the food additive object of the present invention subsequently added to 0.6% of magnesium oxide.
- Figure 5: Neutralizing effect of natural phyllosilicates.
- Figure 6: Effect of the evolution of the bioavailability of calcium, magnesium, and sodium of the food additive object of the present invention under ruminal conditions after 2h of digestion.
- Figure 7: Effect of the evolution of bioavailability of calcium, magnesium, and sodium of the food additive object of the present invention under ruminal conditions after 8h of digestion.
- Figure 8: Evolution of the pH of the food additive object of the present invention overtime in a medium that simulates ruminal conditions.
- Figure 9: Evolution of the pH of the food additive object of the present invention over time in a medium that simulates ruminal conditions.
- Figure 10: Effect of the buffering capacity on the synergy obtained from the different ingredients in the food additive object of the present invention.

### Examples

### Example 1: Study of the buffering effect of the food additive object of the invention compared to traditional agents

The food additive object of the present invention (also referred to for the comparison as the "treatment", due to its potential use as a substance for the treatment of ruminal pH) consists of 72% saponite-type magnesium smectite activated with 4% sodium carbonate (in bulk) and incorporating an additional 2% of the same substance in each one of the two extrusions (that is, 4% after the double extrusion), then added again with sodium carbonate (5%) and magnesium oxide (15%), prior to grinding.

This food additive is compared to other additives known in the field for their significant buffering effect, sodium bicarbonate and sodium carbonate.

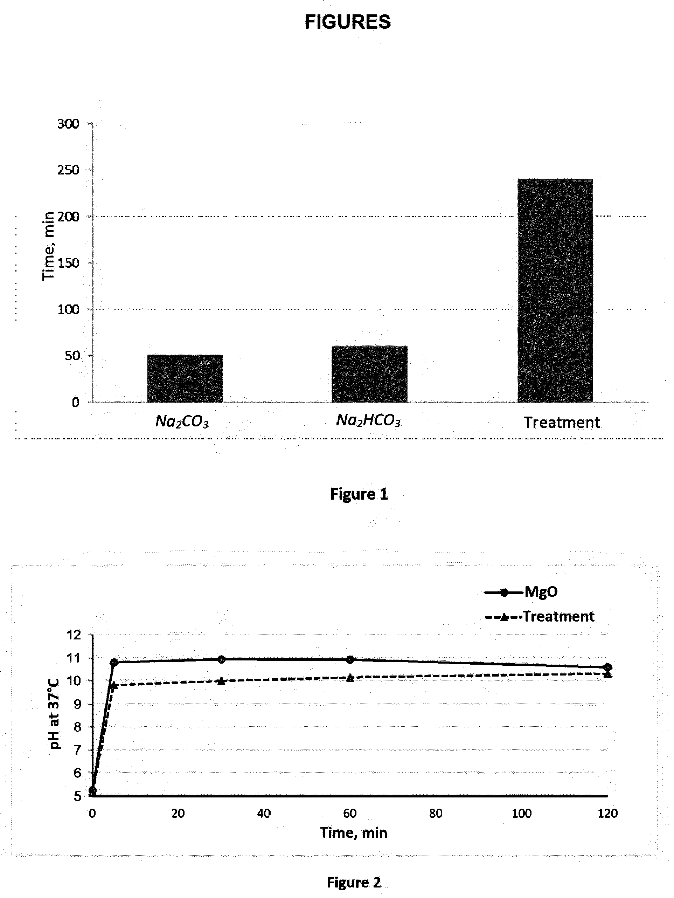

Figure 1 shows the elapsed time it takes for a solution consisting of 100 milliliters of water and 0.5 grams of food additive to be tested to lower the pH to a value below 5.5, through the addition of small volumes of factorized 0.1 N hydrochloric acid. To simulate ruminal conditions, the initial pH of the water was adjusted to 6.5. The study was carried out at a constant temperature of 37 ± 1 °C and with agitation.

It was found that the food additive of the invention takes significantly longer to lower the pH by one unit, to a value below 5.5. , which means that it is able to maintain the pH above the physiological pH of ruminants and prevent cases of SARA.

### Example 2: Study of the buffering effect of the food additive compared to traditional agents

For this example, a food additive according to the present invention is analyzed, consisting of 72% saponite-type magnesium smectite activated with 4% sodium carbonate in bulk and with an additional 4% after double extrusion (2% added in each of the extrusions), with sodium carbonate (5%) subsequently added with magnesium oxide (15%), prior to grinding.

The alkalizing effect of the present food additive is compared to magnesium oxide (purity greater than 88%).

Figure 2 measures the variation in pH over time of a solution made up of 100 milliliters of initially acidified water at pH = 5 and 0.5 grams of ruminal prophylactic additive, at a constant temperature of 37 ± 1°C. The pH measurements are carried out at the beginning, after 5 min, after 30 min, after 1h, and after 2h.

The comparison showed that the values measured for both compositions were equal after two hours, so, for practical purposes, this means that one additive (magnesium oxide) may be substituted with the other (the additive of the present invention) in the diet, obtaining a pH above 9 before the first 20 minutes of action, which is the objective of both additives, with a much smaller amount of the additive of the present invention required compared to the magnesium oxide additive.

### Example 3: Study of the neutralizing effect of the food additive object of the present invention with activation of magnesium phyllosilicate with sodium carbonate and the neutralizing effect of different types of phyllosilicates prior to activation and additivation with the selected ingredients

This example analyzes a single food additive according to the present invention consisting of 72% saponite-type magnesium smectite activated with 4% sodium carbonate in bulk, subsequently adding sodium carbonate at different doses (from "none"- 0% - to 4%) prior to grinding, completing the rest of the formulation of the food additive with saponite-type magnesium smectite to reach 100%.

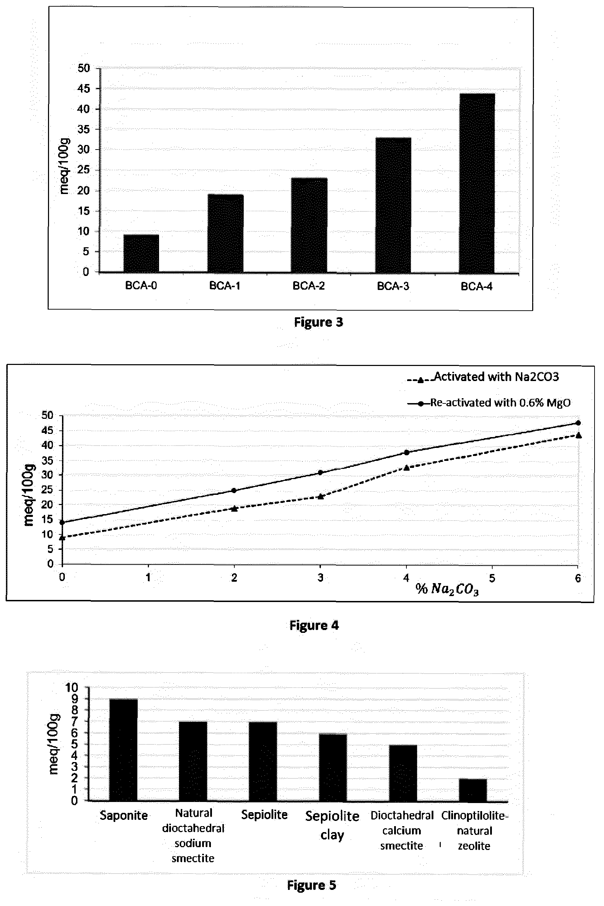

The buffering capacity expressed graphically in Figures 3, 4, and 5 is defined as the amount of factorized 0.1N HCl acid, expressed in moles added to 1 I of buffer, so that its pH varies by one unit with respect to the initial pH. The study was carried out at a constant temperature of 37 ± 1 °C and with agitation, and in all cases, with 0.5 grams of food additive.

Figure 3 shows the buffering effect on the activation of the food additive with different increasing amounts of sodium carbonate (0 % (BCA-0), 1 % (BCA-1), 2 % (BCA-2), 3 % (BCA-3) and 4 % (BCA-4)). It can therefore be observed that activation with an increasing amount of sodium carbonate increases the amount of milli-equivalents of hydrochloric acid (HCI) consumed by the food additive, so that the buffering capacity increases to a maximum of 4%, which is the optimum value found for the activation of the magnesium phyllosilicate. The rest of the formulation of the food additive was completed with saponite-type magnesium smectite to reach 100%.

Later, the same food additive according to the present invention was also analyzed for this example, consisting of 75% saponite-type magnesium smectite activated with 4% sodium carbonate in bulk, subsequently adding sodium carbonate at different doses (from "none"- 0% - to 6%) prior to grinding, and later adding 0.6% magnesium oxide. The rest of the food additive formulation was completed with magnesium smectite to reach 100%.

Figure 4 also shows that the effect of additivation with magnesium oxide in the same phyllosilicate from 0% to 6% increasingly improves the buffer capacity over the measured interval at all levels of activation with sodium carbonate. This way, a better buffer value was therefore observed for the same smectite activated with 4% sodium carbonate and additionally adding 2% of the same buffering agent (sodium carbonate, a total of 6%) and 0.6% magnesium oxide.

Figure 5 studies the neutralizing effect of different types of phyllosilicates prior to activation and additivation with the selected ingredients, and shows that the saponite-type magnesium smectite-type phyllosilicate has a greater buffering effect than the rest, and that both smectites and sepiolites improve the effect of zeolite very significantly. The improvement of the effect of smectite with respect to zeolite is 78% higher in terms of the neutralizing effect.

### Example 4: Study of the buffering effect of the food additive in an in vivo trial

The food additive object of the present invention used in this example consists of 72% saponite-type magnesium smectite activated with 4% sodium carbonate in bulk and with an additional 4% after the double extrusion (2% added in each of the two extrusions), subsequently adding sodium carbonate (5%) and magnesium oxide (15%), prior to grinding. Said additive was incorporated into animal feed with a composition as shown in Table 1.

**Table 1. Formula of the feed compound used to feed the animals of the "in vivo" trial**

| | Control % | Food additive % |
|---|---|---|
| Barley flour | 37.29 | 37.48 |
| Corn flour | 20 | 20 |
| Corn DDG | 14.81 | 14.38 |
| Wheat flour | 8 | 8 |
| Bran 13% PB | 5 | 5 |
| Palmiste expellers | 5 | 5 |
| Beet pulp | 3.44 | 3.74 |
| Beet molasses | 1.5 | 1.5 |
| Olein 55 | 1 | 1 |
| Calcium carbonate | 0.97 | 1.07 |
| Sodium bicarbonate | 0.8 | 0.5 |
| Urea | 0.59 | 0.62 |
| Calcium soap | 0.5 | 0.5 |
| Salt | 0.4 | 0.4 |
| Magnesium oxide | 0.3 | 0 |
| Vitamin-mineral corrector | 0.21 | 0.21 |
| Vit E selenium premix | 0.2 | 0.2 |
| Food additive | 0 | 0.4 |

In an "in vivo" trial, it was possible to decrease the amount of additives used with a buffering effect in the group fed with food additives as compared to the control group, replacing all the magnesium oxide and part of the sodium bicarbonate (Table 1), resulting in an improvement in the production results obtained, average daily gain, conversion index (kg of feed consumed per kg of meat replaced) and in the percentage of hepatic abscesses, one of the symptoms of acidosis (Table 2).

**Table 2. Production results in the "in vivo" trial**

| | Initial Live Weight (kg) | Final carcass weight (kg) | Average daily gain (kg/d) | Conversion index (kg/kg) | Hepatic Abscesses Reduction |
|---|---|---|---|---|---|
| Food additive | 254 | 321 | 1.42 | 4.43 | 74% |
| Control | 256 | 318 | 1.39 | 4.52 | 26% |

### Example 5: Study of the effect of the evolution of the bioavailability of calcium, magnesium, and sodium of the food additive object of the present invention under ruminal conditions after digestion.

The food additive according to the present invention used in this example consists of 72% saponite-type magnesium smectite activated with 4% sodium carbonate in bulk and with an additional 4% after double extrusion (2% added in each of the two extrusions), subsequently adding sodium carbonate (5%) and magnesium oxide (15%), prior to grinding.

Leachates of the calcium, magnesium, and sodium cations were prepared at two different pHs (5.7 and 7), which was achieved by adding a buffer solution of 0.1 M phosphates, starting with 5 grams of food additive and 126 milliliters of buffer solution, to which 50 milliliters of 0.2 N HCI was added. The test was run with two leachate times (2 and 8 h). The leachates obtained were analyzed in a laboratory using molecular absorption spectrometry to measure calcium, atomic absorption spectrometry to measure magnesium, and indirect potentiometry to measure sodium.

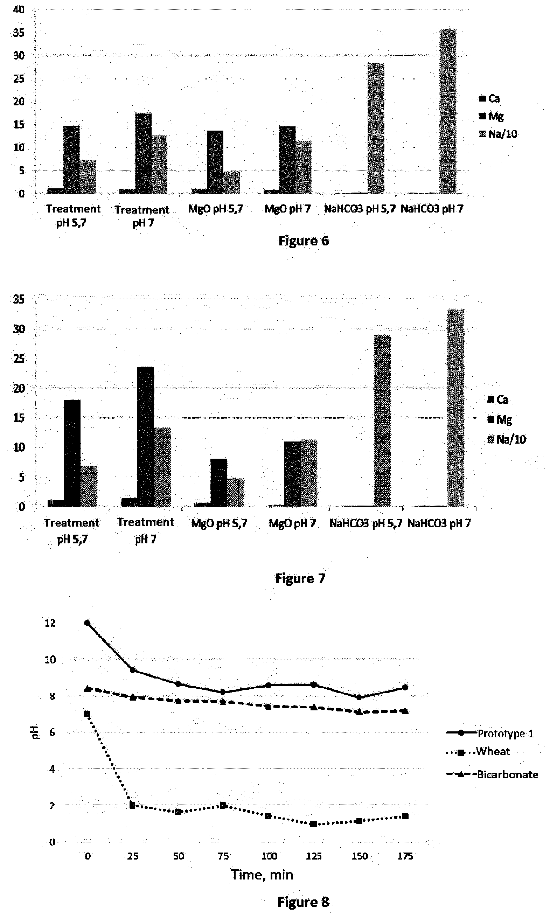

The results obtained in Figure 6 and Figure 7 show how the available Mg with the food additive is at least similar to the available Mg provided by the magnesium oxide with a purity level of over 88%. Magnesium is a fundamental nutrient not only because of its effect at the ruminal level, but also because of its contribution to the other tissues in ruminants and non-ruminants. Thus, it was found that another one of the advantages obtained with this invention is the amount of bio-available magnesium for the animal after 2 hours (Figure 6) and after 8 hours (Figure 7).

### Example 6: Study of the evolution of the pH of the food additive object of the present invention over time in a medium that simulates ruminal conditions.

This example analyzed the buffering capacity of a food additive according to the present invention, consisting of 72% saponite, activated with 4% sodium carbonate, and subsequent to the activation, with double extrusion, during which 4% sodium carbonate was incorporated (2% in each extrusion) and additional adding or another 5% of sodium carbonate and 15% magnesium oxide, prior to grinding, and after extrusion, to a size smaller than 0.15 millimeters (prototype 1),

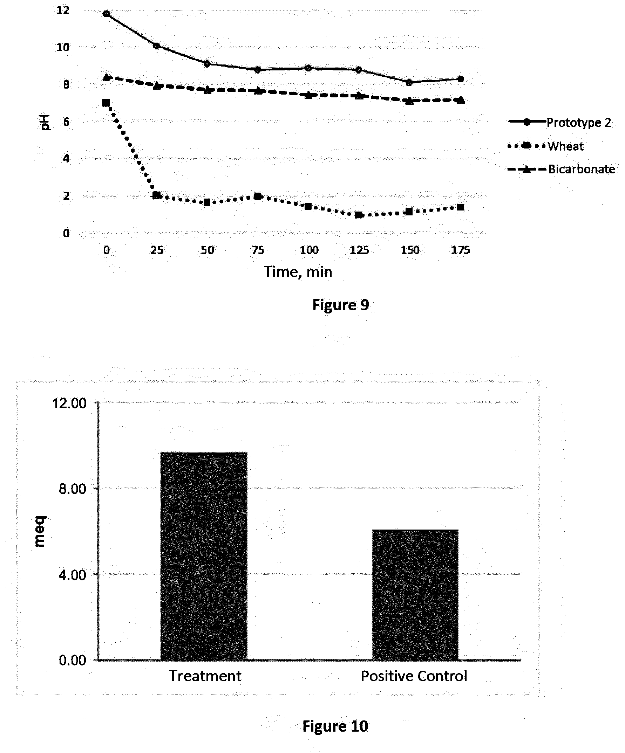

Figures 8 and 9 show how the evolution of the pH over time in a medium that simulates rumen under pH and temperature conditions (bath thermoregulated to 39°C, constant agitation). 0.2 grams of each prepared food additive was added to each vessel, measuring 0.2 milliliters of 0.1 M HCI every 25 minutes.

Specifically, the results in Figure 8 show that the analyzed food additive (prototype 1) evolves positively over time to maintain the pH, compared to a negative control (wheat) and a positive control (sodium bicarbonate).

Figure 9 shows the evolution of the pH over time of a combination consisting of a saponite content of 70%, previously activated with 3% sodium carbonate, extruded twice with 1% sodium carbonate each time, and subsequently adding an additional 15% of sodium carbonate and 10% of magnesium oxide, followed by grinding to a particle size of less than 0.15 millimeters (prototype 2). The results show that prototype 2 evolves positively over time to maintain the pH, compared to a negative control (wheat) and a positive control (sodium bicarbonate).

### Example 7: Study of evolution of pH over time under "in vivo" ruminal conditions

Table 3 shows the results of an "in vivo" trial obtained in fistulized Holstein cows, following a cross-over design with two periods, two treatments, and two animals per treatment, which analyzed the evolution of the pH at the initial moment before adding the treatment and the average value obtained throughout the study, comparing it with a positive control consisting of sodium bicarbonate.

The treatment consisted of prototype 3, which is comprised exclusively of 96% saponite, with an activation of 4% sodium carbonate, with grinding to a particle size of less than 0.15 millimeters, supplied at a dose of 240 grams per animal per day.

The results show that at all times ruminal pH values in ruminally fistulized animals that ingested prototype 3 were higher than the values observed in those that ingested the positive control based on sodium bicarbonate.

**Table 3**

| | Control | Treatment | SE | *P-value* |
|---|---|---|---|---|
| Average initial ruminal pH | 7.18 | 7.09 | 0.6 | 0.93 |
| Average ruminal pH (after addition with prototype 3) | 7.07 | 7.74 | 0.17 | <0.001 |

### Example 8: Study of the effect of the buffering capacity on the synergy obtained from the different ingredients in the food additive object of the present invention.

Figure 10 analyzes the buffering capacity following the conditions in example 3, with 1.2 grams of food additive ("treatment") consisting of 72% saponite-type magnesium smectite activated with 4% sodium carbonate in bulk and with an additional 4% of said compound after double extrusion (2% added in each of the extrusions), subsequently adding sodium carbonate (5%) and magnesium oxide (15%), prior to grinding, comparing it with a positive control consisting of a simultaneous addition of saponite-type magnesium smectite (75%, 1 gram), sodium carbonate (5%, 0.05 grams), and magnesium oxide (15%, 0.15 grams).

The results observed demonstrate that the ingredients forming part of the combination that is object of this invention, supplied independently but simultaneously, do not have the same effect as the one resulting from the use of the food additive object of the present invention.

## Claims

1. A food additive for animals, **characterized in that** it comprises:
- a magnesium phyllosilicate, having a specific surface area of between 50 and 160 m2/g, a cation exchange capacity of between 30 and 170 meq/100 grams, and an intrinsic pH of between 6.5 and 11 in an amount ranging from 31.2% to 98.2% by weight with respect to the total weight of the additive; activated with
- at least one sodium-containing buffering agent, in a proportion of between 1.8% and 68.8% by weight relative to the total weight of the additive.

2. The food additive according to the previous claim, wherein the magnesium phyllosilicate is a smectite magnesium phyllosilicate.

3. The food additive according to the previous claim, wherein the magnesium smectite is saponite.

4. The food additive according to any one of the previous claims, wherein the sodium-containing buffering agent is selected from the group consisting of: sodium carbonate, sodium bicarbonate, and any combinations thereof.

5. The food additive according to the previous claim, wherein the buffering agent is sodium carbonate.

6. The food additive according to any one of the previous claims, comprising the magnesium phyllosilicate in an amount ranging from 31.2% to 89.8%, activated with at least one sodium-containing buffering agent, in a proportion of between 1.8% and 5.2% by weight with respect to the total weight of the additive.

7. The food additive according to any one of the previous claims, comprising an additional amount of the sodium-containing buffering agent comprised between 0.5% and 65% by weight of the total weight of the additive.

8. The food additive according to any one of the previous claims, further comprising an alkalizing agent in a proportion between 0.5% and 65% by weight of the total weight of the additive.

9. The food additive according to the previous claim, wherein the alkalizing agent is magnesium oxide.

10. The food additive according to any of claims 1 to 5, consisting of the magnesium phyllosilicate in an amount of between 96% and 98%, activated with the buffering agent in an amount ranging from 2% to 4% by weight with respect to the total weight of the additive, including both limits.

11. A method for obtaining the food additive described in any one of the previous claims, **characterized in that** it comprises:
- activating a magnesium phyllosilicate, having a specific surface area of between 50 and 160 m2/g, a cation exchange capacity of between 30 and 170 meq/100 grams, and an intrinsic pH of between 6.5 and 11 and a particle size equal to or less than 25 mm. with a sodium-containing buffering agent in the presence of water, the amount of phyllosilicate being between 31.2% and 98.2% and the amount of buffering agent being between 1.8% and 68.8%, by weight relative to the total weight of the composition; and
- grinding the activated magnesium phyllosilicate to a particle size equal to or less than 0.15 mm.

12. The method of the previous claim, further comprising:
- subjecting the activated magnesium phyllosilicate to a first extrusion action in the presence of water; and adding an amount of the sodium-containing buffering agent comprised between 1% and 2% by weight of the total weight of the additive;
- homogenizing the above mixture by means of a second extrusion with an amount of the buffering agent comprised between 1% and 2% by weight of the total weight of the additive in the presence of water; and
- subsequently adding an amount of the buffering agent comprised between 0.5% and 10% by weight of the total weight of the additive, prior to final grinding.

13. The method of the previous claim wherein, after the second extrusion, and prior to or after grinding, an amount of the sodium-containing buffering agent comprised between 1% and 10% and an alkalizing agent in an amount comprised between 1% and 20% by weight of the total weight of the additive are added.

14. The method described in claim 11, comprising:
- shredding the magnesium phyllosilicate to a particle size equal to or less than 25 mm;
- activating the shredded magnesium phyllosilicate with the sodium-containing buffering agent in the presence of water, in the proportions described above;
- subjecting the activated magnesium phyllosilicate to a first extrusion action in the presence of water; and adding an amount of buffering agent comprised between 1% and 2% by weight of the total additive;
- homogenizing the above mixture by means of a second extrusion by adding an amount of the buffering agent comprised between 1% and 2% by weight of the total weight of the additive in the presence of water;
- adding an amount of the buffering agent comprised between 1% and 10% and an alkalizing agent in an amount between 1% and 20% by weight of the total weight of the additive; and
- grinding the final mixture to a particle size equal to or less than 0.15 mm.

15. An animal feed **characterized in that** it comprises the food additive described in any one of claims 1 to 10 in an amount equal to or greater than 0.05% by weight of the total weight of the feed.

16. A composition which is a pre-mixture of food additives for animals **characterized in that** it comprises the food additive described in any one of claims 1 to 10 in an amount equal to or greater than 1% by weight of the total weight of the composition.

## Patentansprüche

1. Lebensmittelzusatzstoff für Tiere, **dadurch gekennzeichnet, dass** er umfasst:
- ein Magnesium-Phyllosilikat mit einer spezifischen Oberfläche von zwischen 50 und 160 m²/g, eine Kationenaustauschkapazität zwischen 30 und 170 meq/100 Gramm und einen intrinsischen pH-Wert zwischen 6,5 und 11 in einer Menge im Bereich von 31,2 bis 98,2 Gew.-%, bezogen auf das Gesamtgewicht des Zusatzstoffs, aktiviert mit
- mindestens einem natriumhaltigen Puffermittel in einem Verhältnis von zwischen 1,8 und 68,8 Gew.-%, bezogen auf das Gesamtgewicht des Zusatzstoffs.

2. Lebensmittelzusatzstoff gemäß dem vorhergehenden Anspruch, wobei das Magnesium-Phyllosilikat ein Smektit-Magnesium-Phyllosilikat ist.

3. Lebensmittelzusatzstoff gemäß dem vorhergehenden Anspruch, wobei das Magnesium-Smektit Saponit ist.

4. Lebensmittelzusatzstoff gemäß einem der vorhergehenden Ansprüche, wobei das natriumhaltige Puffermittel ausgewählt ist aus der Gruppe bestehend aus Natriumkarbonat, Natriumbikarbonat und allen Kombinationen davon.

5. Lebensmittelzusatzstoff gemäß dem vorhergehenden Anspruch, wobei das Puffermittel Natriumkarbonat ist.

6. Lebensmittelzusatzstoff gemäß einem der vorhergehenden Ansprüche, umfassend das Magnesium-Phyllosilikat in einer Menge im Bereich von 31,2 % bis 89,8 %, aktiviert mit mindestens einem natriumhaltigen Puffermittel, in einem Verhältnis zwischen 1,8 und 5,2 Gew.-% bezogen auf das Gesamtgewicht des Zusatzstoffes.

7. Lebensmittelzusatzstoff gemäß einem der vorhergehenden Ansprüche, umfassend eine zusätzliche Menge des natriumhaltigen Puffermittels zwischen 0,5 und 65 Gew.-% des Gesamtgewichts des Zusatzstoffes.

8. Lebensmittelzusatzstoff gemäß einem der vorhergehenden Ansprüche, ferner umfassend ein Alkalisierungsmittel in einem Anteil zwischen 0,5 und 65 Gew.-% des Gesamtgewichts des Zusatzstoffes.

9. Lebensmittelzusatzstoff gemäß dem vorhergehenden Anspruch, wobei das Alkalisierungsmittel Magnesiumoxid ist.

10. Lebensmittelzusatzstoff gemäß einem der Ansprüche 1 bis 5, bestehend aus dem Magnesium-Phyllosilikat in einer Menge zwischen 96 % und 98 %, aktiviert mit dem Puffermittel in einer Menge im Bereich zwischen 2 und 4 Gew.-%, bezogen auf das Gesamtgewicht des Zusatzstoffs, einschließlich beider Grenzwerte.

11. Verfahren zum Gewinnen des in einem der vorangehenden Ansprüche beschriebenen Lebensmittelzusatzes, **dadurch gekennzeichnet, dass** es umfasst:
- Aktivieren eines Magnesium-Phyllosilikats mit einer spezifischen Oberfläche von zwischen 50 und 160 m²/g, eine Kationenaustauschkapazität zwischen 30 und 170 meq/100 Gramm und einen intrinsischen pH-Wert zwischen 6,5 und 11 und eine Partikelgröße gleich oder kleiner als 25 mm, mit einem natriumhaltigen Puffermittel in Gegenwart von Wasser, wobei die Menge des Phyllosilikats zwischen 31,2 % und 98,2 % und die Menge des Puffermittels zwischen 1,8 und 68,8 Gew.-%, bezogen auf das Gesamtgewicht der Zusammensetzung, liegt und
- Mahlen des aktivierten Magnesium-Phyllosilikats auf eine Partikelgröße, die gleich oder weniger als 0,15 mm ist.

12. Verfahren nach dem vorangehenden Anspruch, ferner umfassend:
- Unterziehen des aktivierten Magnesium-Phyllosilikats einer ersten Extrusionsmaßnahme in Gegenwart von Wasser und Zugeben einer Menge des natriumhaltigen Puffermittels zwischen 1 und 2 Gew.-% des Gesamtgewichts des Zusatzstoffes,
- Homogenisieren des obigen Gemisches mittels einer zweiten Extrusion mit einer Menge des Puffermittels zwischen 1 und 2 Gew.-% des Gesamtgewichts des Zusatzstoffes in Gegenwart von Wasser und
- anschließendes Hinzufügen einer Menge des Puffermittels zwischen 0,5 Gew.-% und 10 Gew.-% des Gesamtgewichts des Zusatzstoffes vor dem endgültigen Mahlen.

13. Verfahren nach dem vorangehenden Anspruch, wobei nach der zweiten Extrusion und vor oder nach dem Mahlen eine Menge des natriumhaltigen Puffermittels zwischen 1 % und 10 % und ein Alkalisierungsmittel in einer Menge zwischen 1 und 20 Gew.-% des Gesamtgewichts des Zusatzstoffes zugegeben werden.

14. Verfahren, das in Anspruch 11 beschrieben ist, umfassend:
- Zerkleinern des Magnesium-Phyllosilikats auf eine Partikelgröße gleich oder kleiner als 25 mm,
- Aktivieren des zerkleinerten Magnesium-Phyllosilikats mit dem natriumhaltigen Puffermittel in Gegenwart von Wasser in den vorstehend beschriebenen Verhältnissen,
- Unterziehen des aktivierten Magnesium-Phyllosilikats einer ersten Extrusionsmaßnahme in Gegenwart von Wasser und Zugeben einer Menge von Puffermittel zwischen 1 und 2 Gew.-% des gesamten Zusatzstoffes,
- Homogenisieren des obigen Gemisches mittels einer zweiten Extrusion durch Zugeben einer Menge des Puffermittels zwischen 1 und 2 Gew.-% des Gesamtgewichts des Zusatzstoffes in Gegenwart von Wasser,
- Zugeben einer Menge des Puffermittels zwischen 1 % und 10 % und eines Alkalisierungsmittels in einer Menge zwischen 1 und 20 Gew.-% des Gesamtgewichts des Zusatzstoffes und
- Mahlen des endgültigen Gemisches auf eine Partikelgröße gleich oder kleiner als 0,15 mm.

15. Tierfutter, **dadurch gekennzeichnet, dass** es den in einem der Ansprüche 1 bis 10 beschriebenen Lebensmittelzusatzstoff in einer Menge von gleich oder mehr als 0,05 Gew.-% des Gesamtgewichts des Futters umfasst.

16. Zusammensetzung, die eine Vormischung von Lebensmittelzusatzstoffen für Tiere ist, **dadurch gekennzeichnet, dass** sie den in einem der Ansprüche 1 bis 10 beschriebenen Lebensmittelzusatzstoff in einer Menge von gleich oder mehr als 1 Gew.-% des Gesamtgewichts der Zusammensetzung umfasst.

## Revendications

1. Additif alimentaire pour animaux, **caractérisé en ce qu'**il comprend :
- un phyllosilicate de magnésium, présentant une surface spécifique de 50 à 160 m²/g, une capacité d'échange de cations de 30 à 170 meq/100 grammes, et un pH intrinsèque de 6,5 à 11 dans une quantité de 31,2 % à 98,2 % en masse par rapport à la masse totale de l'additif ; activé avec
- au moins un agent tampon contenant du sodium, dans une proportion de 1,8 % à 68,8 % en masse par rapport à la masse totale de l'additif.

2. Additif alimentaire selon la revendication précédente, dans lequel le phyllosilicate de magnésium est un phyllosilicate de smectite de magnésium.

3. Additif alimentaire selon la revendication précédente, dans lequel la smectite de magnésium est la saponite.

4. Additif alimentaire selon l'une quelconque des revendications précédentes, dans lequel l'agent tampon contenant du sodium est choisi dans le groupe consistant en : carbonate de sodium, bicarbonate de sodium, et des combinaisons quelconques de ceux-ci.

5. Additif alimentaire selon la revendication précédente, dans lequel l'agent tampon est le carbonate de sodium.

6. Additif alimentaire selon l'une quelconque des revendications précédentes, comprenant le phyllosilicate de magnésium dans une quantité de 31,2 % à 89,8 %, activé avec au moins un agent tampon contenant du sodium, dans une proportion de 1,8 % à 5,2 % en masse par rapport à la masse totale de l'additif.

7. Additif alimentaire selon l'une quelconque des revendications précédentes, comprenant une quantité supplémentaire de l'agent tampon contenant du sodium de 0,5 % à 65 % en masse de la masse totale de l'additif.

8. Additif alimentaire selon l'une quelconque des revendications précédentes, comprenant de plus un agent alcalisant dans une proportion de 0,5 % à 65 % en masse de la masse totale de l'additif.

9. Additif alimentaire selon la revendication précédente, dans lequel l'agent alcalisant est l'oxyde de magnésium.

10. Additif alimentaire selon l'une quelconque des revendications 1 à 5, consistant en le phyllosilicate de magnésium dans une quantité de 96 % à 98 %, activé avec l'agent tampon dans une quantité de 2 % à 4 % en masse par rapport à la masse totale de l'additif, incluant les deux limites.

11. Procédé d'obtention de l'additif alimentaire décrit dans l'une quelconque des revendications précédentes, **caractérisé en ce qu'**il comprend :
- l'activation d'un phyllosilicate de magnésium, ayant une surface spécifique de 50 à 160 m²/g, une capacité d'échange de cations de 30 à 170 meq/100 grammes, et un pH intrinsèque de 6,5 à 11 et une taille de particule inférieure ou égale à 25 mm avec un agent tampon contenant du sodium en présence d'eau, la quantité de phyllosilicate étant de 31,2 % à 98,2 % et la quantité d'agent tampon étant de 1,8 % à 68,8 %, en masse par rapport à la masse totale de la composition ; et
- le broyage du phyllosilicate de magnésium activé à une taille de particule inférieure ou égale à 0,15 mm.

12. Procédé selon la revendication précédente, comprenant de plus :
- la soumission du phyllosilicate de magnésium activé à une première action d'extrusion en présence d'eau ; et l'addition d'une quantité de l'agent tampon contenant du sodium de 1 % à 2 % en masse de la masse totale de l'additif ;
- l'homogénéisation du mélange ci-dessus au moyen d'une seconde extrusion avec une quantité de l'agent tampon de 1 % à 2 % en masse de la masse totale de l'additif en présence d'eau ; et
- l'addition subséquente d'une quantité de l'agent tampon de 0,5 % à 10 % en masse de la masse totale de l'additif, avant le broyage final.

13. Procédé selon la revendication précédente dans lequel, après la seconde extrusion, et avant ou après le broyage, une quantité de l'agent tampon contenant du sodium de 1 % à 10 % et d'un agent alcalisant dans une quantité de 1 % à 20 % en masse de la masse totale de l'additif est ajoutée.

14. Procédé selon la revendication 11, comprenant :
- le déchiquetage du phyllosilicate de magnésium à une taille de particule inférieure ou égale à 25 mm ;
- l'activation du phyllosilicate de magnésium déchiqueté avec l'agent tampon contenant du sodium en présence d'eau, dans les proportions décrites ci-dessus ;
- la soumission du phyllosilicate de magnésium activé à une première action d'extrusion en présence d'eau ; et l'addition d'une quantité d'agent tampon de 1 % à 2 % en masse de l'additif total ;
- l'homogénéisation du mélange ci-dessus au moyen d'une seconde extrusion par addition d'une quantité de l'agent tampon de 1 % à 2 % en masse de la masse totale de l'additif en présence d'eau ;
- l'addition d'une quantité de l'agent tampon de 1 % à 10 % et d'un agent alcalisant dans une quantité de 1 % à 20 % en masse de la masse totale de l'additif ; et
- le broyage du mélange final à une taille de particule inférieure ou égale à 0,15 mm.

15. Nourriture pour animaux **caractérisée en ce qu'**elle comprend l'additif alimentaire décrit dans l'une quelconque des revendications 1 à 10 dans une quantité supérieure ou égale à 0,05 % en masse de la masse totale de la nourriture.

16. Composition qui est pré-mélange d'additifs alimentaires pour animaux **caractérisée en ce qu'**elle comprend l'additif alimentaire décrit dans l'une quelconque des revendications 1 à 10 dans une quantité supérieure ou égale à 1 % en masse de la masse totale de la composition.
